**Europäisches Patentamt**

**European Patent Office**

**Office européen des brevets**

(11) Numéro de publication : **0 580 481 A1**

(12) **DEMANDE DE BREVET EUROPEEN**

(21) Numéro de dépôt : **93401840.9**

(22) Date de dépôt : **16.07.93**

(51) Int. Cl.⁵ : **G06F 15/70**

(30) Priorité : **20.07.92 FR 9208920**

(43) Date de publication de la demande :
**26.01.94 Bulletin 94/04**

(84) Etats contractants désignés :
**DE GB IT NL**

(71) Demandeur : **COMMISSARIAT A L'ENERGIE ATOMIQUE**
**31-33, rue de la Fédération**
**F-75015 Paris (FR)**

(72) Inventeur : **Picard, Bernard**
**N 3 Les Eymards, La Providence**
**F-38700 Corenc (FR)**

(74) Mandataire : **Dubois-Chabert, Guy et al**
**c/o BREVATOME 25, rue de Ponthieu**
**F-75008 Paris (FR)**

(54) **Procédé de réalisation d'une image de référence synthétisée à partir de données contenues dans une base de données CAO.**

(57) Procédé de réalisation d'une image de référence synthétisée à partir de données de construction d'images mémorisées dans une base de données, et de moyens de traitement de ces données de construction d'images, procédé consistant en une acquisition d'une image réelle d'un objet à modéliser ainsi qu'en une conversion (51) des données de construction d'images en une image binarisée.

Ce procédé consiste, en outre :

— en un traitement (53) de l'image binarisée pour réaliser une image morphologique ;

— en un traitement (55) de ladite image morphologique pour obtenir une image de niveaux dans laquelle des pixels de même intensité lumineuse et relatifs à l'image binarisée sont regroupés en courbes de niveaux ;

— en une mise en correspondance (57) des pixels de l'image de niveaux avec des pixels de l'image réelle de l'objet à modéliser ; et

— en un échantillonnage (59) de l'image de niveaux afin d'obtenir l'image de référence synthétisée.

FIG. 3

EP 0 580 481 A1

La présente invention concerne un procédé de détection des défauts d'un objet par comparaison, pixel à pixel, entre une image réelle dudit objet et une image de référence synthétisée à partir des données numériques contenues dans une base de données CAO.

Un tel procédé trouve de nombreuses applications dans le domaine de l'inspection industrielle où l'on cherche à contrôler un objet par comparaison de l'image dudit objet avec l'image de référence synthétisée.

De façon plus particulière, cette invention peut être appliquée à la détection des défauts de circuits intégrés fabriqués à partir d'une chaîne de fabrication industrielle et, notamment, à la détection des défauts des réticules utilisés dans l'industrie des semiconducteurs ou de leur empreinte gravée sur une plaquette de silicium.

En effet, l'une des causes principales de la dégradation du rendement des circuits intégrés à très grande intégration comme les circuits VLSI et ULSI, est la présence de défauts sur les réticules utilisés sur les machines de photolithographie employées pour l'insolation des résines photosensibles déposées sur les plaquettes de silicium en cours de fabrication.

Les défauts des réticules peuvent apparaître au cours de la fabrication même des réticules, ou accidentellement au cours des manipulations ou des opérations de nettoyages périodiques ou par contamination.

Les défauts apparaissant au cours de la fabrication peuvent être détectés directement sur les réticules par les machines d'inspection automatique de masques et réticules du type KLA 219®.

Les défauts apparaissant après la fabrication des réticules peuvent être détectés par les machines d'inspection automatique de défauts sur plaquettes de silicium du type KLA 2030®, au cours d'une opération spéciale dite de "Qualification des Réticules". Cette opération consiste à inspecter l'empreinte du réticule sur une couche déposée et gravée sur une plaquette de silicium. Cette couche peut être soit une couche de résine photosensible après insolation et développement, soit une couche d'oxyde ou de nitrure de silicium après gravure de la couche protégée par le masque de résine.

De telles machines d'inspection sont décrites dans le document US-4 926 489, déposé au nom de KLA INSTRUMENTS CORPORATION, le 5 octobre 1987.

Le contrôle des réticules consiste à contrôler la conformité du réticule en sortie de fabrication par rapport aux données utilisées pour sa description, et à vérifier que celui-ci est exempt de tout défaut situé en dehors de fourchettes de tolérances.

L'une des solutions utilisées actuellement pour effectuer le contrôle du réticule est le contrôle visuel par un opérateur au moyen d'un microscope optique, opération longue et fastidieuse et qui, en outre, ne permet de détecter que les défauts les plus importants. Ce contrôle visuel ne peut être effectué qu'au moyen d'un objectif de faible grossissement afin que le temps nécessaire à l'opérateur soit compatible avec les contraintes de temps imposées par les cadences de production.

Une autre solution connue consiste à contrôler l'empreinte au moyen d'une machine d'inspection automatique en mode "puce à puce" pour des réticules multi-puces, c'est-à-dire pour des réticules comportant plusieurs circuits identiques sur la même plaque de verre. Ce mode d'inspection puce à puce consiste à comparer pixel par pixel deux des puces situées sur la plaque de verre.

Dans le cas de réticules mono-puces, c'est-à-dire lorsque le réticule ne comporte qu'un seul circuit sur la plaque de verre, le contrôle est effectué en mode "CAO". Ce type d'inspection consiste à comparer le réticule à sa représentation bidimensionnelle obtenue à partir de la base de données CAO utilisée pour sa description.

Ce type d'inspection présente l'avantage d'être sensiblement plus performant que le simple contrôle visuel par un opérateur. En effet, en raison de la vitesse importante des machines d'inspection automatique, il est possible d'utiliser des objectifs de plus haute résolution qui permettent de détecter des défauts qui ne sont pas visibles à l'aide des objectifs de faible puissance. En outre, la fiabilité de l'inspection est notablement accrue.

L'image de référence ainsi obtenue à partir des données de la base de données CAO est une image de synthèse. Cependant, une telle image n'est pas toujours suffisamment précise par rapport à la réalité. Aussi, afin de rendre ces images plus "réalistes", il est possible d'utiliser un procédé de dégradation de l'image de conception obtenue à partir des données de CAO (Conception Assistée par Ordinateur). Ce procédé permet notamment, d'arrondir les angles pour rendre ladite image plus réaliste et plus proche de l'image de l'objet à contrôler.

Un tel procédé est décrit dans l'article "Advanced 5X reticule inspection technologies for ULSI devices", écrit par Mrs TAKEUCHI, JOSEPH, YOSHIDA, MORRIZUMI, PARKER et WATAKABE et publié en 1990 dans la revue SPIE, vol. n° 1261.

Un tel procédé ne permet cependant qu'une précision limitée de l'image synthétisée.

La présente invention propose un procédé permettant d'obtenir, à partir de la base de données CAO, une image de synthèse très fidèle à l'image réelle de l'objet acquise par un moyen d'acquisition d'images, tel qu'un microscope optique associé à une caméra CCD.

D'une façon générale, l'inspection automatique par comparaison d'images, à partir de la base de données CAO, consiste à réaliser une image de synthèse aussi fidèle que possible à l'image réelle de l'objet à inspecter puis à comparer les deux images, pixel par pixel, selon la même procédure que l'inspection puce à puce.

Selon l'invention, l'image de synthèse est obtenue en cherchant à reproduire les dégradations induites par l'ensemble du processus physique qui conduit des données numériques contenues par la base de données CAO jusqu'à une image sensiblement identique à l'image réelle fournie par le capteur du système d'acquisition (par exemple, le microscope optique associé à une caméra CCD).

Ces dégradations que l'on cherche à reproduire sont de deux types :

- une transformation morphologique des géométries (c'est-à-dire d'un certain type de données numériques) contenues par la base de données CAO, qui se caractérise principalement par un arrondissement des angles desdites géométries. Cette dégradation est liée principalement à la résolution limitée des procédés de lithographie utilisés pour graver les géométries sur le substrat de verre ou de silicium ; et

- une dégradation du profil abrupt des motifs gravés sur le substrat de verre ou de silicium, qui se traduit par des transitions larges au voisinage des bords des géométries. Cette dégradation est liée principalement à la résolution limitée du système d'acquisition.

Aussi, le procédé selon l'invention propose de reproduire ces dégradations afin d'obtenir une image de synthèse très proche de l'image réelle de l'objet à inspecter.

De façon plus précise, l'invention concerne un procédé de réalisation d'une image de référence synthétisée à l'aide de données d'images mémorisées dans une base de données et de moyens de traitement de ces données, procédé consistant à réaliser l'acquisition d'une image réelle de l'objet à modéliser au cours d'une opération d'apprentissage ainsi qu'à convertir les données d'images en une image binarisée (nommée aussi image numérique),

caractérisé en ce qu'il consiste, en outre, en les étapes :

- de traitement de l'image binarisée pour réaliser une image morphologique,

- de traitement de l'image morphologique pour réaliser une image de niveaux dans laquelle des pixels de même intensité lumineuse sont regroupés en courbe de niveaux ;

- de mise en correspondance des pixels de l'image de niveaux avec les pixels de l'image réelle de l'objet à modéliser ; et

- de rééchantillonnage de l'image de niveaux.

On comprendra que ces images sont rééchantillonnées l'une par rapport à l'autre, étant entendu que chacune d'elle a été codée différemment, respectivement, lors de l'acquisition de l'image réelle et lors de la réalisation de l'image binarisée.

Chaque donnée (ou groupe de donnée) constituant un motif de l'image binarisée, l'étape de traitement de l'image binarisée consiste à réaliser une image dégradée dans laquelle les motifs de l'image binarisée sont modifiés selon leur position relative dans ladite image, puis à coder, à partir de cette image dégradée, des distances entre les pixels de l'un des motifs de l'image dégradée et les pixels des motifs voisins pour réaliser l'image de niveaux.

Selon un mode de réalisation de l'invention, l'image dégradée est obtenue par application d'une opération de convolution.

Selon un autre mode de réalisation de l'invention, l'image dégradée est obtenue par application d'une opération de morphologie mathématique.

Avantageusement, l'étape de traitement de l'image binarisée consiste à appliquer une seule opération de convolution de ladite image binarisée au moyen d'un filtre de réponse impulsionnelle finie pour réaliser l'image de niveaux.

De façon plus particulière, le procédé de l'invention est appliqué dans un dispositif d'inspection automatique de défauts d'un objet par comparaison d'une image de l'objet acquise par les moyens de prise de vues avec l'image de référence ainsi synthétisée.

D'autres avantages et caractéristiques de l'invention apparaîtront plus clairement à la lecture de la description qui va suivre donnée, à titre illustratif, mais nullement limitatif, en référence aux dessins dans lesquels :

- la figure 1 représente, de façon fonctionnelle, les étapes du procédé de l'invention ;

- les figures 2A, 2B, 2C et 2D représentent les différentes images intermédiaires réalisées pour obtenir l'image de référence synthétisée à partir des données de la base de données CAO ;

- la figure 3 représente, sous forme fonctionnelle, un mode de réalisation de l'invention ; et

- la figure 4 représente, sous forme fonctionnelle, le mode de réalisation préféré de l'invention.

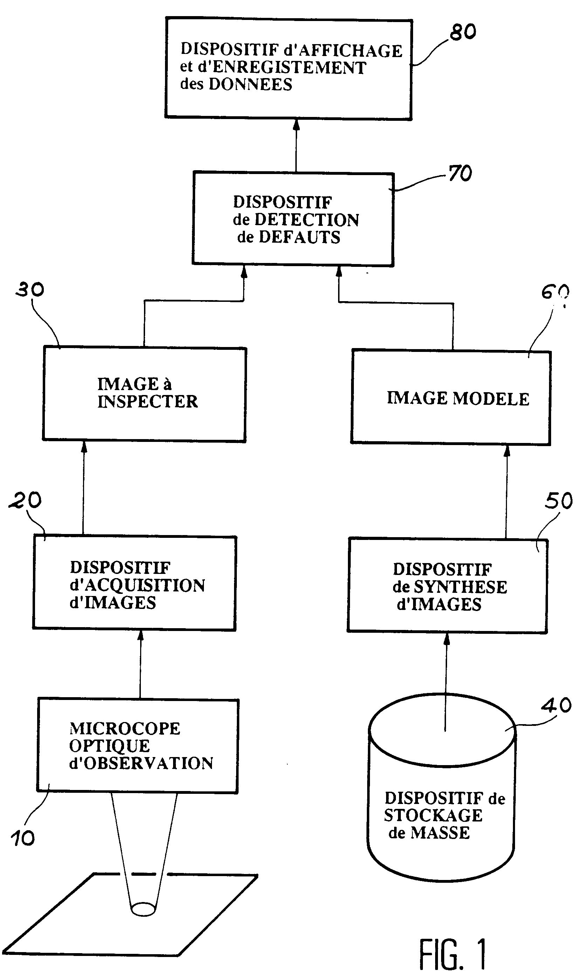

La figure 1 représente un diagramme fonctionnel des étapes du procédé de détection des défauts d'un objet, dans lequel est intégré le procédé de réalisation d'une image de référence synthétisée selon l'invention.

Afin de faciliter la compréhension de ce procédé, la description de cette figure, et des figures suivantes, est réalisée pour le cas de l'inspection d'une plaquette de silicium comportant des motifs relativement fins. On comprendra, cependant, que cette application n'est pas unique ; le procédé selon l'invention peut, en effet, être mis en oeuvre dans d'autres applications.

Pour mettre en oeuvre ce procédé selon l'invention, on utilise un microscope optique d'observation 10 couplé à un dispositif d'acquisition d'images 20 (nommé aussi moyens de prise de vues). Ce microscope optique 10 est utilisé, notamment, pour inspecter les motifs relativement fins de la plaquette de silicium. Le dispositif d'acquisition d'images 20, tel qu'une caméra CCD, permet d'acquérir une image réelle de zones de la plaquette de silicium et, plus précisément, des motifs de la plaquette de silicium que l'on cherche à inspecter.

L'image réelle obtenue en 20 par le dispositif d'acquisition d'images est mémorisée dans le bloc 30 en tant qu'image à inspecter. Parallèlement, une image de synthèse obtenue dans le bloc 50 est utilisée pour réaliser une image modèle qui servira d'image de référence lors de la comparaison avec l'image à inspecter pour déterminer les défauts de ladite image à inspecter. Cette image modèle est obtenue dans le bloc 60.

Pour obtenir cette image modèle, il est nécessaire de réaliser au préalable une image de synthèse. Cette image de synthèse est réalisée dans le bloc 50 par un dispositif de synthèse d'images couplé à un dispositif de stockage de données, référencé 40. Ce dispositif 40 de stockage de données contient les données numériques provenant de la base de données CAO dans laquelle est décrit le circuit intégré à inspecter. Dans le bloc 50, une image numérique INUM est produite par le dispositif de synthèse d'images à partir des données numériques contenues dans le dispositif 40 de stockage. Cette image numérique INUM correspond à la zone du circuit à inspecter située sous l'objectif du microscope 10.

Ce procédé de synthèse d'images, représenté par le bloc 50, sera décrit de façon plus détaillée dans la suite de la description.

L'image à inspecter du bloc 30 et l'image modèle du bloc 60 sont introduites dans le bloc 70 où est réalisée la détection des différences existant entre lesdites image à inspecter et image modèle.

Les résultats obtenus dans le bloc 70, c'est-à-dire les défauts de la zone du circuit intégré à inspecter, sont affichés, ou enregistrés, dans le bloc 80 par, respectivement, des moyens d'affichage de données ou des moyens d'enregistrement des données.

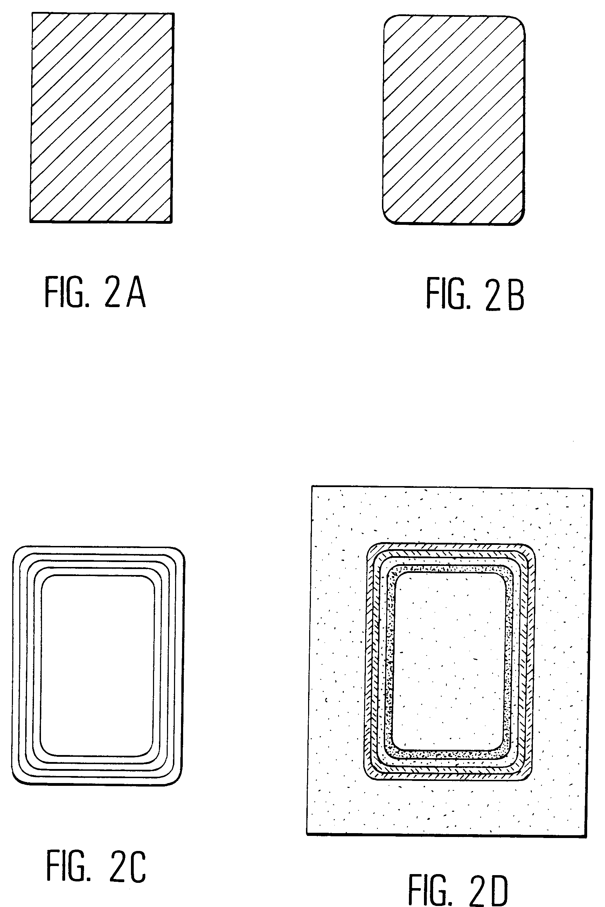

Sur les figures 2A, 2B, 2C et 2D, on a représenté les images intermédiaires obtenues dans les différentes étapes entre la réalisation de l'image binaire et la réalisation de l'image de synthèse (ou image synthétisée) utilisée pour la comparaison avec l'image modèle.

La figure 2A est une représentation de l'image numérique INUM obtenue à partir des données contenues dans la base de données CAO. Cette image numérique est une image binaire ou pseudo-binaire. La réalisation de cette image numérique INUM est effectuée selon un procédé connu de l'homme de l'art. Cette image numérique comporte les géométries contenues dans la base de données CAO, c'est-à-dire sans aucune dégradation d'aucune sorte.

Cette image numérique, de la figure 2A, est donc réalisée par une opération connue de l'homme de l'art et décrite dans "Advanced 5 x reticule inspection technologies for ULSI devices", TAKEUCHI, JOSEPH, YOSHIDA, MORRIZUMI, PARKER et WATAKABE, publié en 1990 dans la revue SPIE vol. n° 1261.

L'opération suivante consiste à produire une image dégradée de l'image numérique. On appellera cette image "l'image morphologique" IMORPH. Cette opération a pour but de provoquer une transformation morphologique de l'image numérique INUM par une opération qui reproduit la dégradation due au procédé de lithographie utilisé pour graver les géométries sur le substrat de silicium. Cette opération, que l'on appelle "opération de transformation morphologique", reproduit la dégradation due à la résolution limitée des procédés de lithographie, telle qu'elle a déjà été décrite précédemment.

La figure 2C représente une image de niveau INIV, c'est-à-dire une image sur laquelle sont représentées les différentes courbes de niveaux lumineuses, appelées également "lignes isophotes". Ces courbes de niveaux lumineuses reproduisent les lignes d'iso-intensité de l'image à inspecter, c'est-à-dire les lignes délimitant les zones de l'image ayant des niveaux de gris identiques.

Lorsque les géométries ne sont pas très denses, c'est-à-dire lorsque la distance entre deux géométries voisines est suffisamment importante pour qu'il n'y ait pas d'effet de proximité entre lesdites géométries voisines (cet effet ayant des perturbations sur chacune des géométries au cours de l'étape de lithographie), les courbes de niveau représentent des lignes d'équidistances, c'est-à-dire des lignes où la valeur des pixels ne dépend que de la distance de ce pixel par rapport à la géométrie la plus voisine.

Au contraire, lorsque les géométries sont denses (c'est-à-dire lorsque la distance entre deux géométries voisines est suffisamment faible pour qu'il y ait des effets de proximité entre ces géométries au cours de l'étape de lithographie ou au voisinage d'angle de géométrie), les courbes de niveau sont influencées par la topologie locale des géométries.

L'image 2D représente l'image de synthèse ISYN finale, c'est-à-dire l'image de synthèse obtenue lorsque le traitement du bloc 50 de la figure 1 a été entièrement réalisé. Cette image de synthèse ISYN est réalisée par une opération de génération de l'image de synthèse finale qui consiste à affecter à chaque pixel de l'image de niveaux INIV de la figure 2C, une valeur correspondant aux valeurs des pixels situés sur les lignes de niveaux lumineuses correspondantes des images acquises dans le bloc 20 d'acquisition d'images. Cette image de synthèse finale ISYN est donc obtenue en introduisant des valeurs de paramètres lues sur une image réelle au cours d'une opération d'apprentissage.

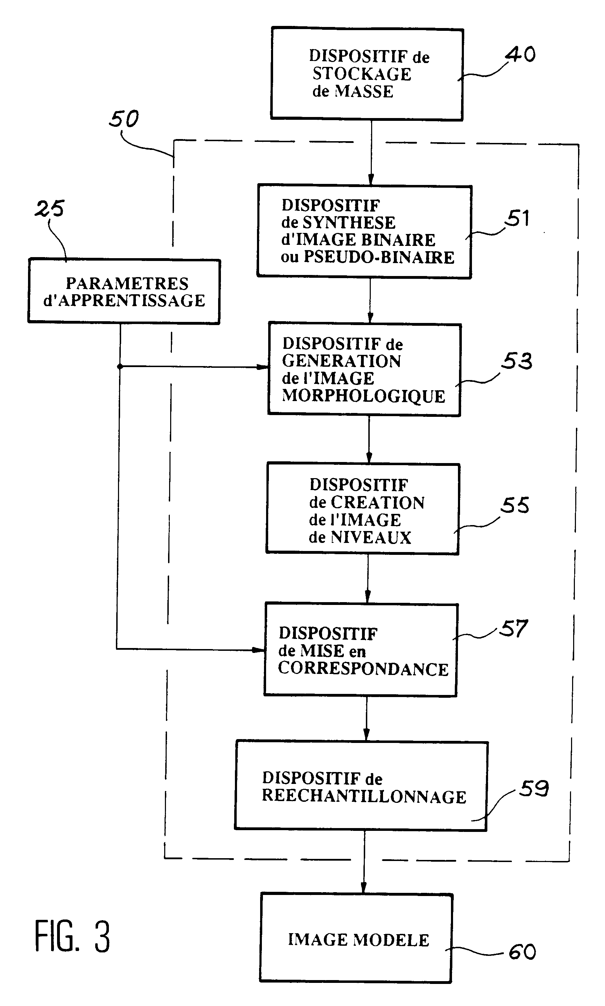

Les opérations effectuées pour réaliser ces différentes images, à savoir l'image numérique INUM, l'image morphologique IMORPH, l'image de niveau INIV et l'image de synthèse ISYN vont maintenant être décrites de façon plus détaillée à travers l'organigramme de la figure 3.

En effet, le bloc 50 de réalisation de l'image de synthèse ISYN comporte des sous-blocs dont, notamment, le sous-bloc 51 qui assure la génération de l'image numérique INUM à partir de la base de données.

Cette image numérique est une image binaire, ou pseudo-binaire, obtenue à partir des données de CAO contenues dans le dispositif de stockage de données. D'une façon générale, l'image binaire ou pseudo-binaire ainsi créée, est codée selon une grille dont le pas est identique au pas de la grille utilisée pour décrire le réticule du circuit intégré contenu dans la base de données CAO. Cependant, l'image binaire ou pseudo-binaire peut être créée dans une grille dont le pas est un multiple du pas de la grille CAO ; il peut même être créé directement dans une grille dont le pas est égal au pas de la maille du capteur d'acquisition, c'est-à-dire de la maille des moyens de prise de vues.

Le traitement effectué dans ce bloc 51 n'est pas décrit de façon plus détaillé car connu de l'homme de l'art.

L'image numérique INUM obtenue dans ce bloc 51 est introduite dans le bloc 53 de génération de l'image morphologique IMORPH.

Dans ce bloc 53 sont également introduits les paramètres d'apprentissage obtenus en 25 à partir de l'acquisition de l'image réelle de l'objet à modéliser.

Ce bloc 53 permet donc de réaliser, à partir de l'image numérique INUM, l'image morphologique IMORPH. De façon plus précise, il permet de réaliser, au moyen d'un opérateur de voisinage (linéaire ou non linéaire) ladite image morphologique IMORPH. Différents modes de réalisation peuvent être utilisés pour cette génération de l'image morphologique, à savoir :

- l'utilisation d'une opération de convolution ;
- l'utilisation d'une opération de convolution suivie d'une opération de seuillage ;
- l'utilisation d'opérations de morphologie mathématique ; ou
- l'utilisation d'un enchaînement d'opérations d'érosion et de dilatation binaires.

Selon un mode préféré de réalisation de l'invention, l'image morphologique IMORPH est générée à partir d'une opération de convolution dont l'expression mathématique est donnée dans la suite de la description.

Lorsque l'image morphologique IMORPH a été générée dans le bloc 53, elle est introduite dans le bloc 55 de création de l'image de niveaux. Ce bloc 55 permet d'affecter à chaque pixel de l'image IMORPH une valeur qui dépend de la position de ce pixel par rapport aux géométries environnantes.

Ainsi, les pixels de l'image morphologique IMORPH, qui sont éloignés de toute transition, sont affectés d'une valeur qui ne dépend que de la géométrie à laquelle appartient ledit pixel. Ces pixels ne peuvent prendre que deux valeurs suivant que la géométrie à laquelle ils appartiennent est une géométrie de type fond ou une géométrie de type motif.

Au contraire, les pixels de l'image morphologique IMORPH qui sont proches d'une transition située dans un environnement de géométrie peu dense (c'est-à-dire un environnement où la distance entre deux géométries est supérieure à la largeur des transitions de l'image réelle), le bloc 55 permet d'affecter à chaque pixel de l'image IMORPH une valeur qui ne dépend que de la distance entre ledit pixel et la transition la plus proche.

Pour des pixels de l'image morphologique IMORPH, proches d'un angle de géométrie, ou d'une transition située dans un environnement de géométrie dense (c'est-à-dire où la distance entre les géométries est inférieure à la largeur des transitions de l'image réelle), alors le bloc 55 permet d'affecter à chacun desdits pixels de l'image morphologique une valeur qui ne dépend, non seulement de la distance par rapport à la géométrie la plus proche, mais, également, de la topologie locale des géométries.

Pour mettre en oeuvre cette génération de l'image de niveau INIV, il est possible d'utiliser différentes sortes d'opérations :

- une opération de codage de la distance ;
- une opération de convolution ; ou
- une opération de convolution suivie d'au moins une opération de seuillage.

Ces opérations sont décrites dans le "PRECIS D'ANALYSE D'IMAGES" de Michel COSTER et Jean-Louis CHERMANT, publié aux Editions du CNRS et dans l'article "Distance transformations in digital images", de la revue Computer Vision, Graphics and Image Processing - Vol. 27 pages 334-371, 1986.

Lorsque l'image de niveau INIV a été générée dans le bloc 55, elle est introduite dans le bloc 57 de mise en correspondance. Ce bloc reçoit également, en entrée, les paramètres d'apprentissage obtenus en 25 par une opération d'apprentissage qui sera décrite ultérieurement.

Ce bloc 57 de mise en correspondance permet d'affecter aux pixels de l'image de niveaux INIV une valeur selon une table de correspondance contenant les valeurs des pixels des lignes iso-intensité contenues par l'image réelle fournie par les moyens d'acquisition d'images.

Selon le mode préféré de réalisation de l'invention, l'étape de mise en correspondance est réalisée au moyen d'une table de correspondance contenant des valeurs prédéterminées dans l'opération d'apprentissage décrite ultérieurement. Il est possible de transcoder les valeurs de l'image de niveaux grâce à cette table de correspondance.

On entend par le terme de "table de correspondance" un dispositif dont la sortie ne dépend que de l'entrée, ce dispositif pouvant être représenté par un tableau monodimensionnel, du type :

$$n_{sortie} = TAB(n_{entrée}).$$

Cette table de correspondance permet, de façon très simple, de modifier la valeur des pixels contenus dans l'image de niveaux INIV selon une loi de répartition connue et définie par le contenu de la table.

Lorsque cette mise en correspondance a été réalisée, l'image issue du bloc 57 est introduite dans le bloc 59 de rééchantillonnage. Ce bloc de rééchantillonnage 59 permet d'adapter la grille de codage de l'image de synthèse ISYN obtenue en sortie du bloc 57, à la grille de codage de l'image à inspecter, afin de permettre la comparaison pixel à pixel de ladite image de synthèse avec ladite image à inspecter.

D'une façon générale, l'image de synthèse est obtenue dans une grille identique à la grille utilisée pour coder les données contenues dans la base de données CAO.

On comprend bien que, dans le cas où le pas de la grille utilisée pour coder ces données issues de la base de données CAO est identique au pas de la grille du capteur utilisé dans les moyens d'acquisition, l'étape 59 de rééchantillonnage n'est pas nécessaire.

Cette étape 59 de rééchantillonnage est utile afin de mettre l'image de synthèse ISYN et l'image à inspecter dans un même "format", c'est-à-dire un format où les images sont formées de pixels de même taille, ce qui les rend aptes à être comparés pixel à pixel.

Comme cela a été expliqué précédemment, des paramètres d'apprentissage sont introduits dans le bloc 53 et dans le bloc 57. Ces paramètres d'apprentissage sont obtenus dans'une opération d'apprentissage effectuée une seule et unique fois avant l'étape d'inspection, c'est-à-dire avant la réalisation des étapes du bloc 50. Cette opération d'apprentissage est réalisée à partir d'une image réelle obtenue par les moyens d'acquisition. Cette opération comporte les étapes suivantes :

a) Sélectionner, sur l'objet à inspecter, une zone de référence.

b) Effectuer l'acquisition de l'image à inspecter de cette zone de référence à l'aide des moyens d'acquisition.

c) Générer l'image binaire (ou pseudo-binaire) correspondante à partir des données contenues dans la base de données CAO.

d) Rééchantillonner, si nécessaire, l'image à inspecter dans la grille de l'image binaire (ou pseudo-binaire).

On appellera, dans la suite de la description, cette nouvelle image "image à inspecter rééchantillonnée".

e) Calculer le décalage entre l'image à inspecter rééchantillonnée et l'image binaire.

Ces étapes a) à e) sont effectuées une seule et unique fois pour toute l'opération d'apprentissage. Il n'en est pas de même des étapes suivantes qui, elles, peuvent être effectuées plusieurs fois. Ces étapes consistent à :

f) Sélectionner un jeu de paramètres utilisé dans le bloc 53 de génération de l'image morphologique.

g) Créer l'image morphologique IMORPH.

h) Créer l'image de niveau INIV dans le bloc 55.

i) Déterminer les valeurs contenues par la table de correspondance en effectuant la comparaison pixel à pixel entre les pixels des lignes de niveaux contenus par l'image INIV et les pixels des lignes iso-intensité contenus par l'image à inspecter rééchantillonnée, et ce, en tenant compte du décalage calculé au cours de l'étape e).

Cette étape est réalisée en utilisant l'opération inverse de l'opération donnée précédemment, à savoir $TAB(n_{entrée}) = n_{sortie}$.

Dans le cas où cette relation est surdéterminée, c'est-à-dire dans le cas où, pour une valeur de $n_{entrée}$ de l'image de niveau INIV, il existe plusieurs valeurs $n_{sortie}$ correspondant à l'image à inspecter, l'opération d'apprentissage permet d'affecter une valeur unique à la table de correspondance TAB selon un critère de décision qui peut être, par exemple, la valeur moyenne ou la valeur médiane de toutes les valeurs $n_{sortie}$ possibles correspondant à la valeur $n_{entrée}$ ;

j) Créer l'image modèle en introduisant, dans l'image de synthèse ISYN, des paramètres déterminés au cours de l'opération i) précédente.

k) Effectuer la comparaison pixel à pixel entre l'image modèle et l'image à inspecter de la zone de référence.

l) Répéter les étapes f) à k) autant de fois que nécessaire de façon à obtenir des paramètres permettant d'obtenir un résultat jugé satisfaisant lors de la comparaison entre l'image modèle et l'image à inspecter de la zone de référence.

On obtient ainsi, d'une part, un jeu de paramètres correct utilisé dans le bloc 53 de génération de l'image morphologique, et une table de correspondance TAB.

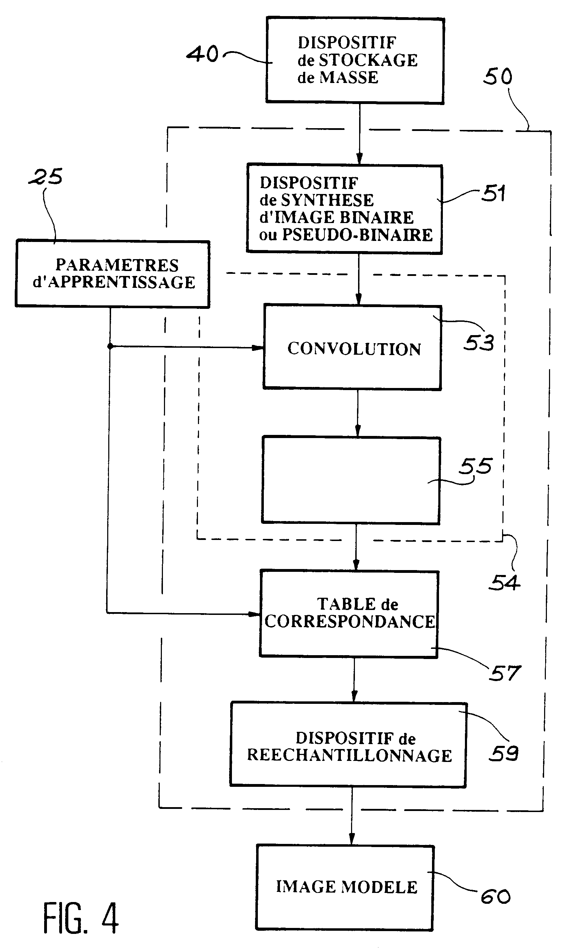

La figure 4 représente l'organigramme d'un mode de réalisation préféré du procédé selon l'invention.

Ce mode de réalisation consiste à regrouper les opérations effectuées dans l'étape 53 et dans l'étape 55 en une seule et même étape, référencée 54. En effet, pour un tel mode de réalisation du procédé, l'étape 55 de création de l'image de niveau INIV est réalisée simultanément avec l'opération de génération de l'image morphologique 53. De façon plus précise, dans le bloc 53, on effectue une convolution permettant à la fois de générer l'image morphologique IMORPH et de créer l'image de niveau INIV.

Cette opération de convolution de l'image numérique INUM est réalisée par un filtre à réponse impulsionnelle finie.

De façon plus précise, ce filtre peut être représenté sous la forme d'un tableau de m∗n pixels, qui effectue une transformation s'exprimant sous la forme suivante :

$$T(i, j) = \sum_{k=-k_1}^{k_2} \sum_{l=-l_1}^{l_2} C(k, l) \, Im(i-k, j-l)$$

où $C(k, l)$ identifie le coefficient d'un pixel particulier du tableau m∗n dans lequel :
$$m = k_1 + k_2 + 1, \, n = l_1 + l_2 + 1 \, ; \, et$$
où $Im(i, j)$ identifie la valeur d'un pixel particulier de l'image numérique INUM. On peut aussi appeler le tableau des coefficients $C(k, l)$ "noyau de la convolution".

En effet, un tel filtre comporte un double effet :

- celui d'effectuer une transformation morphologique de l'image INUM analogue à la dégradation des géométries introduite lors de l'étape de photolithographie ; et
- celui d'effectuer une opération de codage de niveaux, au sens défini par le mode général de réalisation de l'invention. En effet, la valeur de chaque pixel de l'image obtenue en sortie du filtre est affectée par la valeur des [(m∗n)-1] pixels voisins.

Lorsque les géométries environnantes sont à une distance, l'une de l'autre, supérieure à la largeur du noyau de convolution, la valeur de chaque pixel ne dépend que de la distance de ce pixel à la géométrie la plus proche.

Lorsque les géométries environnantes sont à une distance l'une de l'autre inférieure à la largeur du noyau de convolution, ou au voisinage des angles de géométries, la valeur de chaque pixel dépend également de la topologie locale des géométries, c'est-à-dire la position des géométries entre elles.

Sur une réalisation tout à fait particulière de ce mode de réalisation du procédé selon l'invention, il est possible de réaliser cette étape 54 à l'aide d'un filtre moyenneur s'exprimant sous la forme :

$$T(i, j) = \sum_{k=-k_1}^{k_2} \sum_{k=-l_1}^{l_2} Im(i-k, j-l) \, ,$$

qui a une forme similaire à l'expression du filtre de réponse impulsionnelle finie, mais où les coefficients $C(k, l)$ sont égaux à 1.

Selon le mode de réalisation préféré de l'invention, la plupart des étapes du procédé sont identiques aux étapes décrites précédemment et ne sont donc pas décrites de façon particulière. Seule l'opération d'apprentissage est quelque peut modifiée.

De façon plus précise, la mise en oeuvre de l'opération d'apprentissage comporte les mêmes opérations a) à e) décrites précédemment. Les opérations f) à l), quant à elles, sont quelque peu modifiées de la façon qui suit et consiste à :

f) Sélectionner un noyau de convolution utilisé par le convolueur 54, ce noyau étant défini par ses dimensions m et n, et les valeurs des coefficients $C(k, l)$.

g) et h) Créer l'image de niveaux INIV.

i) Déterminer les valeurs contenues par la table de correspondance.

j) Créer l'image modèle.

k) Effectuer la comparaison pixel à pixel entre l'image modèle, et l'image à inspecter de la zone de référence.

l) Répéter les étapes f) à k) autant de fois que nécessaire, jusqu'à ce que le noyau de convolution sélectionné au cours de l'étape f) permette d'obtenir une image modèle, dont la comparaison au cours de l'étape k) avec l'image à inspecter donne un résultat jugé satisfaisant.

Cette opération d'apprentissage permet d'obtenir les caractéristiques du noyau de convolution utilisé dans le bloc 54 et la table de correspondance associée TAB.

Un tel procédé a pour avantage, notamment, d'être facile à mettre en oeuvre sur un dispositif électronique car les traitements numériques effectués sur les images ne nécessitent que des opérateurs numériques simples. En outre, les opérateurs numériques utilisés pour ce traitement sont des opérateurs connus de l'homme de l'art et faciles à trouver sur le marché, ce qui a pour effet de permettre un coût relativement peu élevé pour le dispositif de mise en oeuvre du procédé selon l'invention.

## Revendications

1. Procédé de réalisation d'une image de référence synthétisée à partir de données de construction d'images mémorisées dans une base de données, et de moyens de traitement de ces données de construction d'images, procédé consistant en une acquisition (10, 20) d'une image réelle d'un objet à modéliser au cours d'une opération d'apprentissage ainsi qu'en une conversion (51) des données de construction d'images issues de la base de données en une image binarisée (INUM),

   caractérisé en ce qu'il consiste, en outre :
   - en un traitement (53) de l'image binarisée pour réaliser une image morphologique ;
   - en un traitement (55) de ladite image morphologique pour obtenir une image de niveaux dans laquelle des pixels de même intensité lumineuse et relatifs à l'image binarisée sont regroupés en courbes de niveaux (INIV) ;
   - en une mise en correspondance (57) des pixels de l'image de niveaux avec des pixels de l'image réelle de l'objet à modéliser ; et
   - en un échantillonnage (59) de l'image de niveaux afin d'obtenir l'image de référence synthétisée (ISYN).

2. Procédé selon la revendication 1, dans lequel chaque donnée de construction d'images, ou groupe de données de construction d'images, constitue un motif de l'image binarisée, caractérisé en ce que le traitement de l'image binarisée consiste à obtenir une image dégradée (IMORPH) dans laquelle les motifs de l'image binarisée sont modifiés selon leur position relative dans ladite image binarisée, et à coder, à partir de cette image dégradée, des distances entre des pixels de l'un des motifs de l'image dégradée et des pixels des motifs voisins pour obtenir ladite image de niveaux.

3. Procédé selon la revendication 2, caractérisé en ce que l'image dégradée est obtenue par application d'une opération de convolution effectuée sur l'image binarisée.

4. Procédé selon la revendication 2, caractérisé en ce que l'image dégradée est obtenue par application d'une opération de morphologie mathématique effectuée sur l'image binarisée.

5. Procédé selon la revendication 1, caractérisé en ce que le traitement de l'image binarisée consiste à appliquer une seule opération de convolution de ladite image binarisée au moyen d'un filtre à réponse impulsionnelle finie pour obtenir l'image de niveaux.

6. Procédé selon l'une quelconque des revendications 1 à 5, caractérisé en ce qu'il est appliqué dans un dispositif d'inspection automatique de défauts d'un objet, par comparaison d'une image de l'objet acquise par les moyens de prise de vues, avec l'image de référence ainsi synthétisée.

FIG. 1

FIG. 2 A

FIG. 2 B

FIG. 2C

FIG. 2D

DISPOSITIF de
STOCKAGE
de MASSE — 40

50

25

PARAMETRES
d'APPRENTISSAGE

DISPOSITIF
de SYNTHESE
d'IMAGE BINAIRE
ou PSEUDO-BINAIRE — 51

DISPOSITIF de
GENERATION
de l'IMAGE
MORPHOLOGIQUE — 53

DISPOSITIF
de CREATION
de l'IMAGE
de NIVEAUX — 55

DISPOSITIF
de MISE en
CORRESPONDANCE — 57

DISPOSITIF de
REECHANTILLONNAGE — 59

FIG. 3

IMAGE MODELE — 60

*40* → DISPOSITIF de STOCKAGE de MASSE

*50*

*25* PARAMETRES d'APPRENTISSAGE

DISPOSITIF de SYNTHESE d'IMAGE BINAIRE ou PSEUDO-BINAIRE *51*

CONVOLUTION *53*

*55*

*54*

TABLE de CORRESPONDANCE

*57*

DISPOSITIF de REECHANTILLONNAGE *59*

IMAGE MODELE *60*

FIG. 4

EP 0 580 481 A1

Office européen
des brevets

**RAPPORT DE RECHERCHE EUROPEENNE**

Numero de la demande

EP 93 40 1840

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | EP-A-0 381 067 (SCHLUMBERGER TECHNOLOGIES, INC.)<br>* abrégé; revendications 1-9 *<br>--- | 1-6 | G06F15/70 |
| A | EP-A-0 054 598 (IBM)<br>* abrégé; revendications 4,5,7,10 *<br>* page 10, alinéa II.1 *<br>* page 12, alinéa II.3 *<br>----- | 1,4 | |

**DOMAINES TECHNIQUES RECHERCHES (Int.Cl.5)**

G06F

Le présent rapport a été établi pour toutes les revendications

| Lieu de la recherche | Date d'achèvement de la recherche | Examinateur |
|---|---|---|
| LA HAYE | 2 Novembre 1993 | GONZALEZ ORDONEZ, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

13